# EUROPEAN PATENT APPLICATION

(11) **EP 3 687 038 A1**
(43) Date of publication of application: **29.07.2020**
(21) Application number: 20153401.3
(22) Date of filing: 23.01.2020
(51) Int. Cl.: H02K 1/32, H02K 9/19, H02K 1/27, H02K 9/12, H02K 5/20, H02K 1/20, H02K 7/00

(54) **ELECTRIC MOTOR**

(30) Priority: 25.01.2019 KR 20190009884
(71) Applicant: LG Electronics Inc., Seoul 07336 (KR)
(72) Inventor: KANG, Joon, 08592 Seoul (KR); YOON, Jinho, 08592 Seoul (KR)
(74) Representative: Vossius & Partner Patentanwälte Rechtsanwälte mbB

(57) **Abstract**

The present disclosure relates to an electric motor that may include a housing provided therein with an accommodating space; a stator having a stator core and provided in the accommodating space of the housing; a rotor having a rotor core and rotatably mounted inside the stator with an air gap therebetween; a rotating shaft provided therein with a hollow portion and having a plurality of rotating shaft injection holes formed at a central portion thereof, so that a cooling fluid introduced into the hollow portion is sprayed through the plurality of rotating shaft injection holes into the rotor core; and a plurality of cooling passages provided in the rotor core, and having one side thereof communicating with each of the plurality of rotating shaft injection holes and another side thereof communicating with the accommodating space, so that the cooling fluid is sprayed in different directions toward opposite ends to a central portion of the rotor core.

## Description

### BACKGROUND

### 1. Technical Field

The present disclosure relates to a motor for forming a flow path of the cooling fluid by forming a flow path inside the rotating shaft and the rotor core.

### 2. Description of the Related Art

An electric vehicle is an eco-friendly vehicle that uses only electricity as its source of energy and is driven by supplying an electrical energy to an electric motor from a high-voltage battery.

In general, an electric motor includes a rotor and a stator. The rotor may be provided inside the stator in a rotatable manner.

Technologies have been developed to cool down heat generated in the electric motor. Heat is generated in a stator coil, wound around a stator core, of the stator when an electric current flows in the stator coil to rotate the rotor.

As for the electric motor used in the electric vehicle, cooling of heat generated in the electric motor plays an important role in achieving a high powered, smaller, and more efficient electric motor.

In conventional motor cooling methods, an indirect cooling method in which cooling water is circulated inside the housing to indirectly cool down a motor, and a direct cooling method in which oil is directly sprayed onto a stator or rotor to cool down the motor.

The direct cooling method has higher cooling efficiency and cooling performance compared to the indirect cooling method. Thus, research and development on the direct cooling method have been actively carried out recently.

In European Patent Laid-Open Publication No. EP 2 667 486 B2, which is hereby incorporated by reference, a method for cooling down a rotor of an electric device is disclosed.

The related art Patent Document discloses a structure for cooling down a motor by forming a flow path such that a cooling fluid flows in a rotating shaft and a rotor core, respectively.

However, the related art Patent Document has the following problems.

First, a cooling fluid is introduced into a rotating shaft through one end thereof, and is then distributed to a cooling passage in a rotor core from another end of the rotating shaft. However, the cooling fluid is not evenly distributed in the rotor core.

Accordingly, due to uneven flow distribution of cooling fluid, vibration and noise caused by mass imbalance of the cooling fluid during highspeed rotation may occur, thereby causing problems such as damage.

Second, a cooling passage is provided in the rotating shaft such that a cooling fluid flows in an axial direction. However, this may cause a sealing problem when the cooling fluid is introduced into the rotating shaft from a cooling fluid supply portion.

For example, since the rotating shaft rotates at a high speed and the cooling fluid supply portion is stationary, it is difficult to seal a cooling fluid supply pipe that connects between the rotating shaft and the cooling fluid supply portion.

In addition, friction may occur when the cooling fluid supply pipe is connected to the rotating shaft as it is rotatable.

### SUMMARY

Embodiments disclosed herein solve problems of the related art. Embodiments disclosed herein provide an electric motor that can evenly cool down an entire rotor by distributing an amount of flow of cooling fluid evenly from a central portion of a rotating shaft to an inside of a rotor core in a lengthwise direction, and reduce vibration and noise by evenly distributing a cooling fluid.

Embodiments disclosed herein provide an electric motor that can solve problems of sealing and friction between a cooling fluid supply pipe and a rotating shaft by fixing the cooling fluid supply pipe inside the rotating shaft to be accommodated.

Embodiments disclosed herein provide an electric motor that can evenly cooling down an entire rotating shaft by applying a structure in which a cooling fluid supply pipe is accommodated in a hollow portion of the rotating shaft.

Embodiments disclosed herein provide an electric motor that may include a housing provided therein with an accommodating space, a stator having a stator core and provided in the accommodating space of the housing, a rotor having a rotor core and rotatably mounted inside the stator with an air gap therebetween, a rotating shaft provided therein with a hollow portion and having a plurality of rotating shaft injection holes formed at a central portion thereof so that a cooling fluid introduced into the hollow portion is sprayed through the plurality of rotating shaft injection holes into the rotor core, and a plurality of cooling passages provided in the rotor core and having one side thereof communicating with each of the plurality of rotating shaft injection holes and another side thereof communicating with the accommodating space so that the cooling fluid is sprayed in different directions toward opposite ends to a central portion of the rotor core.

The cooling fluid may be a non-conductive fluid.

The cooling fluid may be oil or air.

Each of the plurality of cooling passages may be divided into two sides from the central portion of the rotor core along a lengthwise direction of the rotor core. Each of the plurality of cooling passages divided into the two sides may include a plurality of first cooling passage portion communicating with the plurality of rotating shaft injection holes and extending in a radial direction of the rotor core, and a plurality of second cooling passage portions having one end thereof communicating with the plurality of first cooling passage portions and another end thereof communicating with the accommodating space, and extending in the lengthwise direction of the rotor core.

The plurality of first cooling passage portions and the plurality of the second cooling passage portions may be spaced apart from each other in a circumferential direction, respectively.

Each of the plurality of first cooling passage portions and the plurality of second cooling passage portions may have a circular cross section, respectively.

The rotor core may include a partition wall dividing the plurality of cooling passages into the two sides from the central portion of the rotor core along the lengthwise direction of the rotor core, a plurality of first core laminations disposed on both surfaces of the partition wall in the lengthwise direction and formed by laminating a plurality of core plates, each having the plurality of first cooling passage portions therein, and a plurality of second core laminations disposed on surfaces of the plurality of first core laminations in the lengthwise direction, the surfaces opposite to the partition wall, and each having the plurality of second cooling passage portions therein.

Each of the plurality of first core laminations may further include a rotating shaft accommodating hole formed through a central portion thereof in a thickness direction, a plurality of magnet accommodating holes spaced apart from one another in an outer circumferential direction of the rotating shaft accommodating hole. Each of the plurality of first cooling passage portions may be located between the plurality of magnet accommodating holes and the rotating shaft accommodating holes, respectively, and one side thereof may communicate with the rotating shaft accommodating hole and another side thereof may extend radially outward from the one side. Each of the plurality of second cooling passage portions may be provided at an end of the another side of the first cooling passage portion in a circular shape, respectively.

The plurality of magnet accommodating holes may extend to be inclined with respect to a virtual center line that passes through a center of the rotating shaft accommodating hole in a radial direction, and accommodate permanent magnets of different polarities alternately arranged in a circumferential direction of the rotor core. The plurality of second cooling passage portions may be located between a plurality of virtual center lines adjacent to the circumferential direction of the rotor core.

The plurality of rotating shaft injection holes may be provided at the central portion of the rotating shaft to be spaced apart from one another in an axial direction and in a circumferential direction of the rotating shaft.

Each of the plurality of rotating shaft injection holes may be radially formed through the rotating shaft, respectively, so that an inner end thereof communicates with the hollow portion and an outer end thereof communicates with the cooling passage.

The plurality of rotating shaft injection holes disposed apart from one another in the axial direction may be different in size depending on a flow of the cooling fluid distributed in opposite directions from the central portion of the rotor core.

A cooling fluid supply pipe accommodated in the hollow portion of the rotating shaft may be further provided to supply the cooling fluid to the hollow portion.

One end of the rotating shaft may be opened, and another end of the rotating shaft may be provided with a blocking wall that blocks an outflow of cooling fluid.

A return passage may be provided between the rotating shaft and the cooling fluid supply pipe. The return passage may be designed to return the cooling fluid flowing from one end to another end of the cooling fluid supply pipe to the plurality of rotating shaft injection holes.

The cooling fluid supply pipe may further include a guide portion protruding adjacent to the plurality of rotating shaft injection holes and configured to guide a cooling fluid flowing along the return passage to the plurality of rotating shaft injection holes.

The rotor may further include an end plate mounted at both ends of the rotor core, respectively, and a plurality of rotor injection holes communicating with the another side of the cooling passage and provided at the end plate, so that the cooling fluid is sprayed into the accommodating space.

In addition, an oil flow path having an oil inlet port formed at one side thereof and provided inside an upper portion of the housing, a plurality of radial oil injection holes communicating with the oil flow path and formed through the upper portion of the housing in a thickness direction, so that oil is sprayed into an inner space of the housing, and an oil outlet port provided at a lower portion of the housing may be further provided.

The stator may further include a coil wound around the stator core, an oil flow groove communicating with the oil flow path and formed on a circumferential surface of the stator core along a circumferential direction, and a plurality of axial injection holes communicating with the oil flow groove and formed in the stator core along a lengthwise direction, so that oil is sprayed from opposite ends of the stator core to the coil.

In addition, a housing cover coupled to both ends of the housing, respectively, a cover oil flow path having one end thereof communicating with the oil flow path and provided in the housing cover, and a bearing cooling passage provided at another end of the cover oil flow path to cool down the bearing may be further provided.

Effects of an electric motor according to the embodiments of the present disclosure are as follows.

First, a rotor core may be formed by laminating a partition wall, a plurality of first core laminations and a plurality of second laminations together. In detail, a plurality of first cooling passage portions extending in a radial direction and a plurality of second cooling passage portions extending in an axial direction may be formed such that a cooling fluid flows in the first core laminations and the second core laminations, respectively. Then, the first core laminations and the second core laminations are divided in opposite directions based on the partition wall located at a central portion of the rotor core long a lengthwise direction to be laminated.

With this configuration, a flow of cooling fluid is branched in opposite directions at the central portion of the rotor core, thereby evenly distributing the flow of cooling fluid into the rotor core. In addition, problems such as vibration, noise, and, damage caused by an imbalance in flow rate may be solved. Further, a pressure loss of a cooling passage provided in the rotor core may be minimized.

Second, a cooling fluid supply pipe may be mounted inside a rotating shaft to be accommodated, and a plurality of cooling passages may be provided inside the rotor core to guide a cooling fluid into the rotating shaft and the rotor core. By doing so, the rotor, that causes high heat generation when an electric motor is driven at high speed, may be directly cooled down, thereby increasing cooling efficiency. As a result, driving stability and reliability of the electric motor may be enhanced, and driving efficiency of the electric motor itself may be increased.

Third, as a cooling fluid supply pipe in a rotating shaft and a cooling passage in the rotor core are located as close as possible to a cause of high heat generation (permanent magnet), thermal resistance between the cause of heat generation and a cooling fluid may be minimized, thereby increasing or maximizing rate (or speed) at which heat is removed.

Fourth, as the cooling fluid supply pipe having a small diameter is mounted in a hollow portion of the rotating shaft to be accommodated, and one end of the cooling fluid supply pipe is fixed to the housing, problems of friction and sealing between the cooling fluid supply pipe and the rotating shaft may be solved.

Fifth, a cooling fluid flowing along the hollow portion of the rotating shaft may evenly cool the entire rotating shaft. As an inner diameter of the hollow portion of the rotating shaft is larger (or greater) than the diameter of the cooling fluid supply pipe, an inner surface area of the rotating shaft that comes in contact with a cooling fluid may be increased, thereby enhancing a cooling effect.

Sixth, as a bearing cooling passage is provided inside a bearing accommodation portion to cool down a bearing, lifespan of the bearing may be extended, thereby increasing lifespan of the electric motor in overall.

### BRIEF DESCRIPTION OF THE DRAWINGS

FIG. 1 is a conceptual view illustrating an outer appearance of an electric motor according to an embodiment of the present disclosure.
FIG. 2 is a cross-sectional view taken along line "II-II" of FIG. 1.
FIG. 3 is a cross-sectional view taken along line "III-III" of FIG. 2.
FIG. 4 is a conceptual view of a rotor after removing a housing and a stator in FIG. 1.
FIG. 5 is a cross-sectional view taken along line "V-V" FIG. 4.
FIG. 6 is a conceptual view of a rotating shaft after removing a rotor core in FIG. 4.
FIG. 7 is a conceptual view of a cooling fluid supply pipe after removing the rotating shaft in FIG. 6.
FIG. 8 is a conceptual view illustrating a state in which a rotor core in FIG. 4 is disassembled from a partition wall and a plurality of core laminations.
FIG. 9 is a conceptual view of the partition wall in FIG. 8.
FIG. 10 is a conceptual view illustrating a state in which a communication hole communicating with a first cooling passage portion is formed at a first core lamination in FIG. 8.
FIG. 11 is a conceptual view illustrating a state in which a second cooling passage portion is formed at a second core lamination in FIG. 8.
FIG. 12 is a conceptual view illustrating a shape of a cooling passage provided inside the rotor core in FIG. 4.

### DETAILED DESCRIPTION OF THE EMBODIMENTS

Hereinafter, embodiments will be described with reference to the accompanying drawings. In the drawings, the same or similar elements are designated with the same or similar reference numeral, and redundant description has been omitted. Suffixes, such as "module" and "unit", may be used to refer to elements or components. Use of such a suffix herein is merely intended to facilitate description of the specification, and the suffix itself is not intended to give any special meaning or function. In describing embodiments, if a detailed explanation for a related known technology or construction is considered to unnecessarily divert the gist, such explanation has been omitted but would be understood by those skilled in the art. Also, it should be understood that the accompanying drawings are merely illustrated to easily explain the concept, and therefore, they should not be construed to limit the technological concept disclosed herein by the accompanying drawings, and the concept should be construed as being extended to all modifications, equivalents, and substitutes included in the concept and technological scope.

Terms including ordinal numbers such as first and second, for example, may be used herein to describe various elements, but the elements should not be limited by those terms. The terms are used merely for the purpose to distinguish an element from another element.

It will be understood that when an element is referred to as being "connected with" another element, the element can be directly connected with the other element or intervening elements may also be present. On the contrary, in case where an element is "directly connected" or "directly linked" to another element, it should be understood that any other element is not existed therebetween.

A singular representation may include a plural representation as far as it represents a definitely different meaning from the context.

Terms "include" or "has" used herein should be understood that they are intended to indicate the existence of a feature, a number, a step, a constituent element, a component or a combination thereof disclosed in the specification, and it may also be understood that the existence or additional possibility of one or more other features, numbers, steps, constituent elements, components or combinations thereof are not excluded in advance.

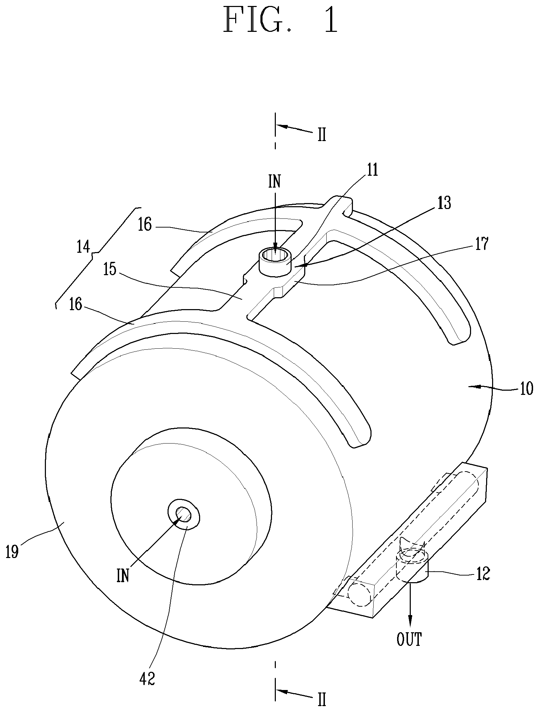

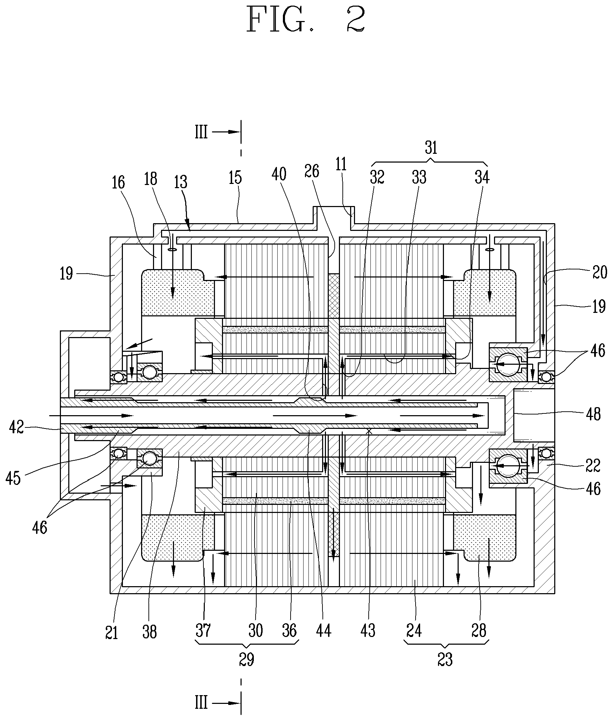

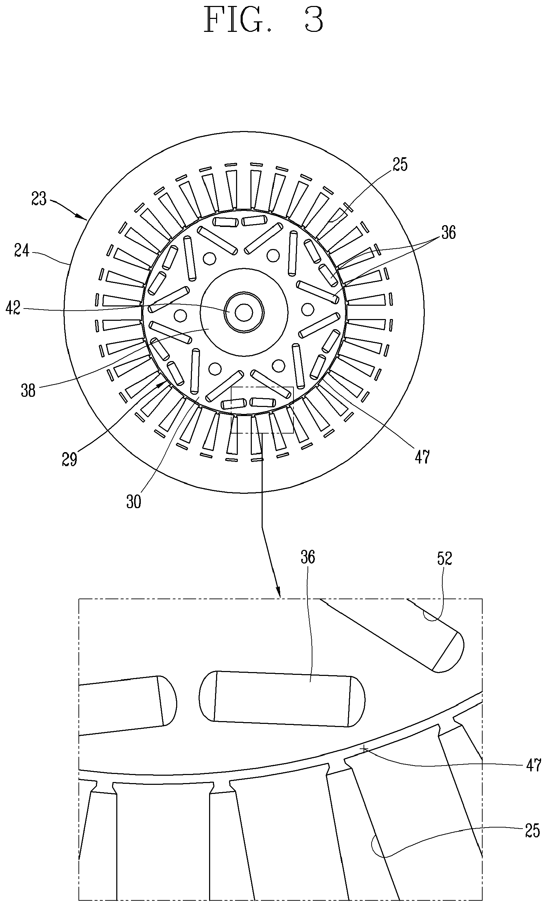

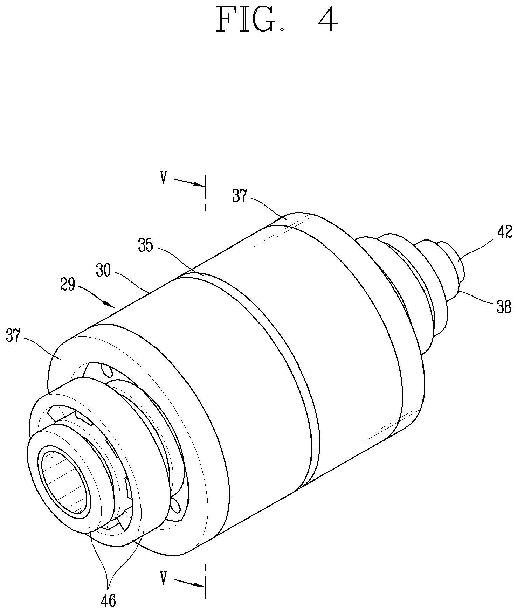

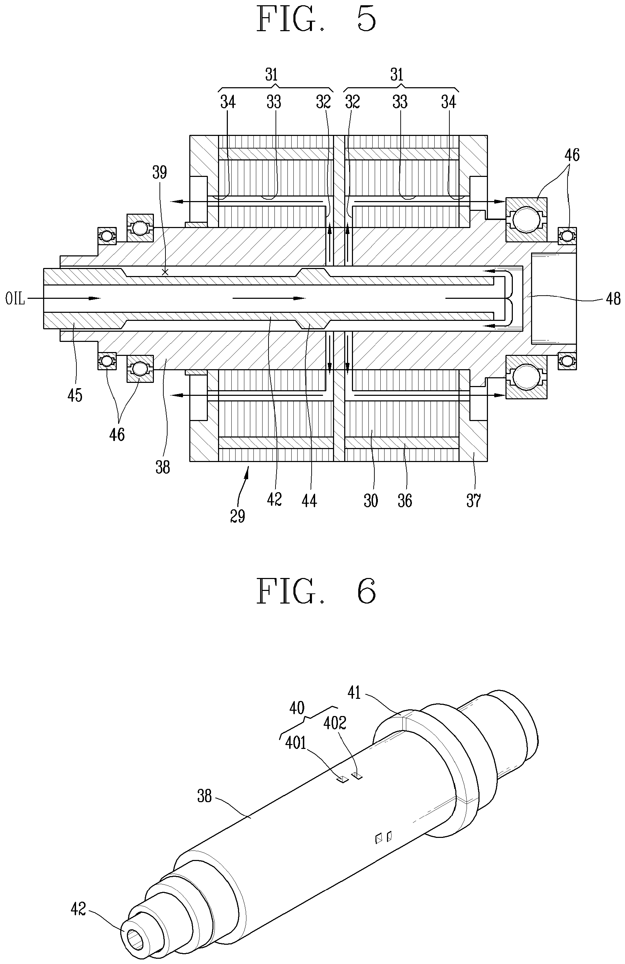

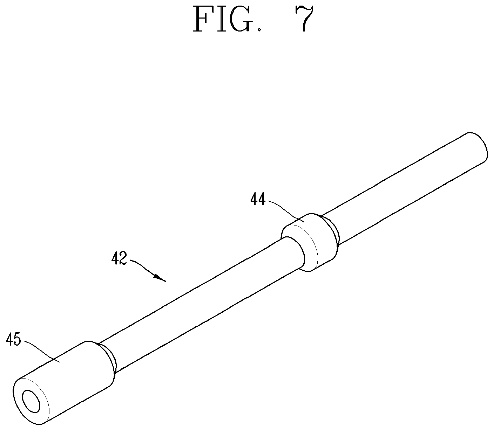

FIG. 1 is a conceptual view illustrating an outer appearance of an electric motor according to an embodiment of the present disclosure, FIG. 2 is a cross-sectional view taken along line "II-II" of FIG. 1, FIG. 3 is a cross-sectional view taken along line "III-III" of FIG.2, FIG. 4 is a conceptual view of a rotor after removing a housing and a stator in FIG. 1, FIG. 5 is a cross-sectional view taken along line "V-V" FIG. 4, FIG. 6 is a conceptual view of a rotating shaft after removing a rotor core in FIG. 4, and FIG. 7 is a conceptual view of a cooling fluid supply pipe after removing the rotating shaft in FIG. 6.

An electric motor according to an embodiment of the present disclosure may include a housing 10, a stator 23, and a rotor 29.

The housing 10 may define an outer appearance of the electric motor. The housing 10 may have a cylindrical shape. The housing 10 may be provided therein with an accommodating space. Both ends of the housing 10 may be opened, respectively. The housing 10 may be provided with a housing cover 19.

The housing cover 19 may be coupled to the both ends of the housing 10, respectively, so as to cover the both ends of the housing 10.

The stator 23 may be accommodated in the accommodating space of the housing 10. The stator 23 may include a stator core 24 and a coil 28.

The stator core 24 may be made up of a plurality of laminated electrical steel sheets and have a cylindrical shape. An outer circumferential surface of the stator core 24 may be press-fitted to an inner circumferential surface of the housing 10.

A rotor accommodating hole may be formed in a center of the stator core 24. The rotor 29 may be accommodated in the rotor accommodating hole of the stator core 24. With an air gap 47 between an inner circumferential surface of the stator core 24 and the rotor 29, the rotor 29 may be mounted to the stator core 24 in a rotatable manner with respect to a rotating shaft 38.

A plurality of slots 25 may be provided inside the stator core 24. The coil 28 may be wound around the stator core 24 through the plurality of slots 25. The coil 28 may be configured as a hairpin type. A portion of the coil 28 protruding out of opposite ends of the stator core 24 may be referred to as an end coil 28.

A cooling fluid may be introduced into the housing 10 so as to cool the electric motor.

In the present disclosure, a cooling fluid may include a non-conductive fluid, such as oil, air, or the like. In this embodiment, oil is used as an example of the cooling fluid.

For example, an oil flow path 13 may be provided at an upper portion of the housing 10. The oil flow path 13 may be formed in the housing 10.

An oil inlet port 11 may be provided at one side of the oil flow path 13, so that oil is introduced into the housing 10 through the oil inlet port 11.

An oil outlet port 12 may be provided at a lower portion of the housing 10, so that oil is discharged to an outside from an inside of the housing 10 through the oil outlet port 12.

The oil discharged through the oil outlet port 12 may flow to the oil inlet port 11 by an oil pump (not shown).

The oil discharged through the oil outlet port 12 may be cooled by an oil cooler (not shown) to be circulated through the oil inlet port 11.

The oil flow path 13 may protrude from an upper outer circumferential surface of the housing 10. Alternatively, the oil flow path 13 may be provided at the cylindrical-shaped housing 10 in a recessed manner. In this embodiment, the oil flow path 13 is provided in the housing 10 and protrudes from the upper outer circumferential surface of the housing 10.

The oil flow path 13 may include an oil distributor 14, a stator core connecting portion 17, and the like.

The oil distributor 14 may include an axial oil distribution portion 15 extending in a lengthwise direction of the housing 10, and a circumferential oil distribution portion 16 extending in a circumferential direction of the housing 10.

The stator core connecting portion 17 may be provided at a central portion of the axial oil distribution portion 15. The stator core connecting portion 17 may protrude widely to both left and right (or lateral) sides from the central portion of the axial oil distribution portion 15.

An upper side of the stator core connecting portion 17 may communicate with the oil inlet port 11, so that part (or some) of oil flows in the lengthwise direction of the housing 10 along the axial oil distribution portion 15.

A lower side of the stator core connecting portion 17 may communicate with an oil flow (or movement) groove 26 of the stator core 24, which will be described hereinafter, so that another part (or some other) of the oil flows from the stator core connecting portion 17 to the oil flow groove 26 of the stator core 24 along a circumferential direction.

The circumferential oil distribution portion 16 may be provided at front and rear end potions of the axial oil distribution portion 15 in an arc shape, respectively. A central portion of the circumferential oil distribution portion 16 may communicate with the axial oil distribution portion 15, so that oil transferred from the axial oil distribution portion 15 moves in the circumferential direction along the circumferential oil distribution portion 16.

A plurality of radial oil injection (or spray) holes 18 at a lower side of the circumferential oil distribution portion 16 may be formed through the housing 10 in a thickness direction. Each of the plurality of radial oil injection holes 18 may be spaced apart from one another in the circumferential direction of the housing 10.

With this configuration, oil, allocated by the circumferential oil distribution portion 16, may be injected or sprayed though each of the plurality of radial oil injection holes 18 into the accommodating space of the housing 10.

Oil may be sprayed through each of the plurality of radial oil injection holes 18 directly onto the end coil 28, so as to directly cool down the end coil 28.

The oil flow groove 26 may be formed at a central portion in a lengthwise direction of the stator core 24 along the circumferential direction.

The oil flow groove 26 may be opened radially outward and concave radially inward. The outermost end (opened side) of the oil flow groove 26 may be covered by the inner circumferential surface of the housing 10.

An upper central portion of the oil flow groove 26 may communicate with the oil inlet port 11 through the stator core connecting portion 17, so that oil flows radially inward of the stator core 24 along the oil flow groove 26.

The stator core 24 may be provided with a plurality of axial injection holes 27. The plurality of axial injection holes 27 may be located radially outward than the plurality of slots 25. The plurality of axial injection holes 27 may be spaced apart from one another in a circumferential direction of the stator core 24.

Each of the plurality of axial injection holes 27 may be axially formed through the stator core 24 along the lengthwise direction. One end of the plurality of axial injection holes 27 may communicate with the oil flow groove 26, respectively, and another end thereof may communicate with the accommodating space of the housing 10 in a direction of any one of the opposite ends of the stator core 24.

With this configuration, oil may flow from the oil flow groove 26 along the plurality of axial injection holes 27 so as to be injected toward the end coil 28.

The housing cover 19 may be provided therein with a cover oil flow path 20 extending in a radial direction. An outer end of the cover oil flow path 20 may communicate with one end of the oil distributor 14, and an inner end of the cover oil flow path 20 may communicate with a bearing accommodation (or accommodating) portion 21.

The bearing accommodation portion 21 may axially protrude from an inner surface of the housing cover 19. The bearing accommodation portion 21 may be formed in the circumferential direction to cover a bearing 46.

The bearing 46 may be accommodated in the bearing accommodation portion 21. A bearing cooling passage 22 may be disposed between the bearing accommodation portion 21 and the bearing 46.

With this configuration, oil may flow from the oil distributor 14 to the cover oil flow path 20 and the bearing cooling passage 22. As the oil exchanges heat with the bearing 46 while flowing along the bearing cooling passage 22, the bearing 46 may be cooled down.

As oil is sprayed through the plurality of axial oil injection holes 27 directly onto the coil 28, heat generated in the coil 28 may be directly cooled down, thereby improving cooling efficiency and cooling performance of the electric motor.

The plurality of axial injection holes 27 may be located adjacent to the plurality of slots 25 in the radial direction, thereby minimizing thermal resistance between the coil 28, which is a heating element (or high heating source), and oil, which is a cooling medium. Accordingly, the heat produced in the coil 28 may be conducted evenly or uniformly from a central portion of the stator core 24 in the lengthwise direction. As a result, a cooling speed of the stator 23 may be quickly increased.

In addition, the oil flow groove 26 may allow oil to flow radially inward from an outer edge of the central portion of the stator core 24, so as to release heat generated in the central portion of the stator core 24 to the oil. Accordingly, the stator 23 may be efficiently cooled down.

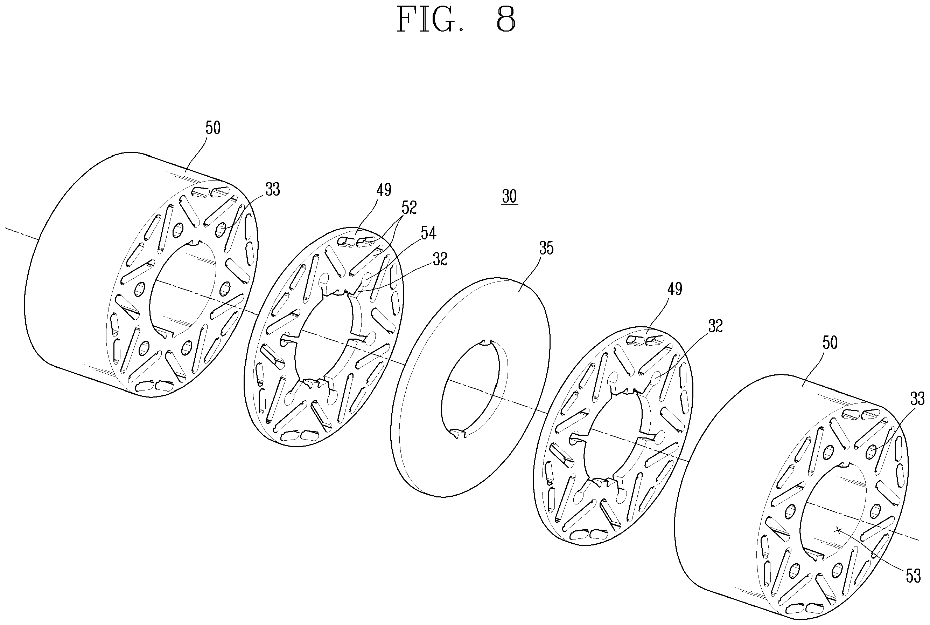

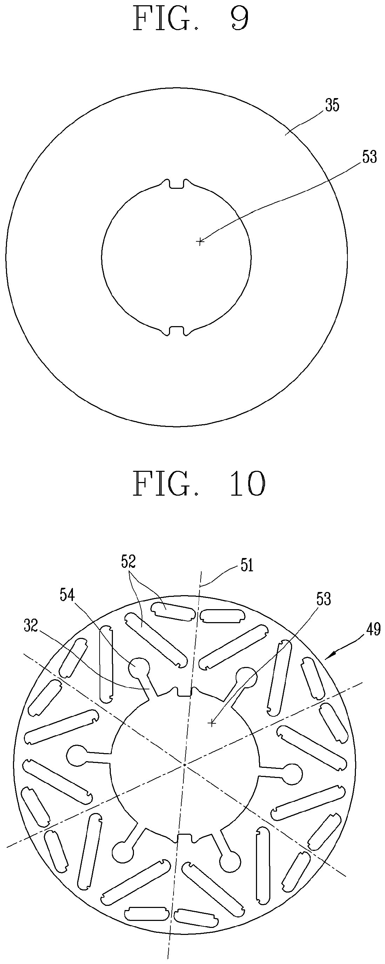

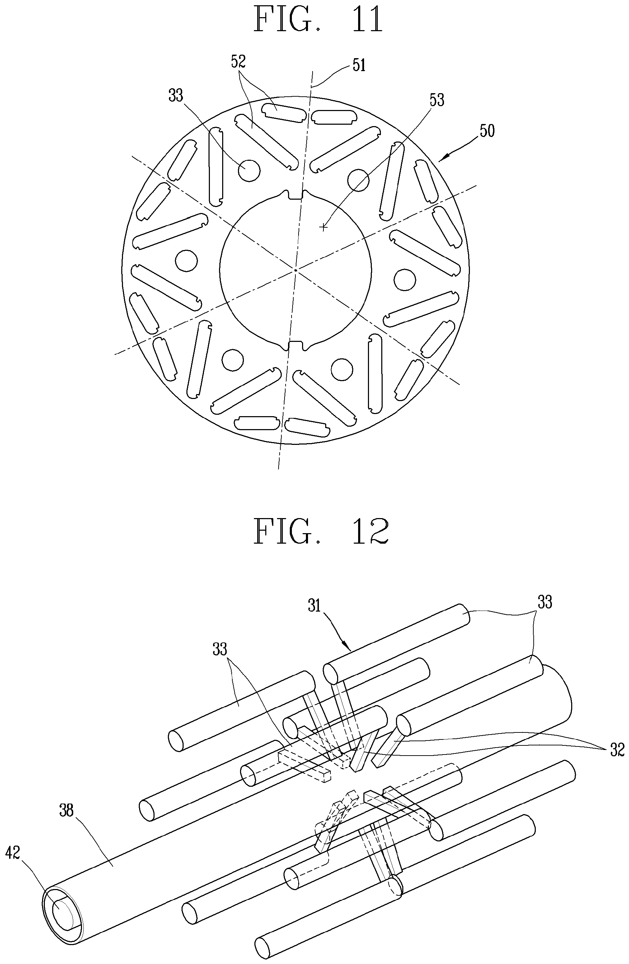

FIG. 8 is a conceptual view illustrating a state in which a rotor core (30) in FIG. 4 is disassembled from a partition wall (35) and a plurality of core laminations, FIG. 9 is a conceptual view of the partition wall (35) in FIG. 8, FIG. 10 is a conceptual view illustrating a state in which a communication hole (54) communicating with a first cooling passage portion (32) is formed at a first core lamination (49) in FIG. 8, FIG. 11 is a conceptual view illustrating a state in which a second cooling passage portion (33) is formed at a second core lamination (50) in FIG. 8, and FIG. 12 is a conceptual view illustrating a shape of a cooling passage (31) provided inside the rotor core in FIG. 4.

The rotor 29 may include a rotor core 30, a permanent magnet 36, and an end plate 37.

The rotor 29 may be disposed inside the stator core 24 with the air gap 47 therebetween.

The rotor core 30 may be formed by stacking or laminating a plurality of electrical steel sheets (or also referred to as "core plate"). The rotor core 30 may have a cylindrical shape.

A plurality of magnet accommodating holes 52 may be axially formed through the rotor core 30, so that a plurality of permanent magnets 36 is accommodated in the plurality of magnet accommodating holes 52.

A rotating shaft accommodating hole 53 may be axially formed through a central portion of the rotor core 30, so that the rotating shaft 38 may be accommodated in the rotating shaft accommodating hole 53. The rotating shaft 38 may have a cylindrical shape.

The end plate 37 may be coupled to both ends of the rotor core 30, respectively, in a covering manner, so as to prevent the plurality of permanent magnets 36 from being out of the magnet accommodating hole 52.

A plurality of cooling passages 31 may be provided inside the rotor core 30. The plurality of cooling passages 31 may be spaced apart from each other in the circumferential direction.

The plurality of cooling passages 31 located inside the rotor core 30 may be divided in opposite directions, so that a cooling fluid is injected or sprayed in different directions from each other along a lengthwise direction of the rotor core 30.

For example, the plurality of cooling passages 31 may be disposed at one side and another side of the rotor core, respectively, with respect to the central portion of the rotor core 30 in the lengthwise direction.

Each of the plurality of cooling passages 31 disposed at the one side and the another side of the rotor core 30 may include a plurality of first cooling passage portions 32 and a plurality of second cooling passage portions 33, respectively.

Each of the plurality of first cooling passage portions 32 may extend in a radial direction of the rotor core 30.

Each of the plurality of second cooling passage portions 33 may extend in an axial direction of the rotor core 30.

A radial outer end of each of the plurality of first cooling passage portions 32 and an axial inner end of each of the plurality of second cooling passage portions 33 may be connected to each other in a communicating manner.

The rotor core 30 may include a partition wall 35, a plurality of first core laminations 49, and a plurality of second core laminations 50.

The rotor core 30 may be formed by laminating the partition wall 35, the plurality of first core laminations 49, and the second core laminations 50, each having a plurality of core plates with a thin disk shape.

The plurality of first core laminations 49 and the plurality of second core laminations 50 may be located at opposite sides in the lengthwise direction of the rotor core 30 with the partition wall 35 interposed therebetween.

The plurality of cooling passages 31 may penetrate through the partition wall 35, the plurality of first core laminations 49, and the second core laminations 50 in a thickness direction, respectively.

The rotating shaft accommodating hole 53 may communicate with the partition wall 35, the plurality of first core laminations 49, and the plurality of second core laminations 50 in an axial direction, respectively.

The plurality of magnet accommodating holes 52 may be formed through the plurality of first core laminations 49 and the plurality of second core laminations 50 in the thickness direction, respectively.

The plurality of magnet accommodating holes 52 may be located at the core laminations to be spaced apart from one another in the circumferential direction. N and S poles of the permanent magnets 36 may be arranged alternately along the circumferential direction.

The plurality of magnet accommodating holes 52 may be located symmetrically on opposite sides with respect to a virtual center line 51 that passes through a center of the rotating shaft accommodating hole 53 in the radial direction. A plurality of the virtual center lines 51 may be spaced apart from one another in a circumferential direction of the first and second core laminations 49 and 50, respectively.

The plurality of magnet accommodating holes 52 may be inclined at a predetermined angle with respect to the virtual center line 51. According to the polarity (of the magnet), the plurality of magnet accommodating holes 52 may be formed in an inclined manner with the virtual center line 51 interposed therebetween.

For example, four magnet accommodating holes 52 may be provided for each polarity. Each of the plurality of magnet accommodating holes 52 may have a long hole with a narrow width and a long length. Both ends of the plurality of magnet accommodating holes 52 may be formed in a semicircular shape, respectively.

Two magnet accommodating holes 52 located radially outward and radially inward of the rotor core 30, respectively, may be inclined with respect to the virtual center line 51.

Here, an inclined angle between the two magnet accommodating holes 52 located radially outward of the rotor core 30, and an inclined angle between the two magnet accommodating holes 52 located radially inward of the rotor core 30 may be different from each other.

The two magnet accommodating holes 52 located radially inward may extend longer in length than the two magnet accommodating holes 52 located radially outward. Also, an outer end of each of the two magnet accommodating holes 52 located radially inward may be wider in a tangential direction than an outer end of each of the two magnet accommodating holes 52 located radially outward.

Each of the plurality of cooling passages 31 may be disposed between the magnet accommodating hole 52 and the rotating shaft accommodating hole 53.

The partition wall 35 may be located at a central portion in the lengthwise direction of the rotor core 30.

The plurality of cooling passages 31 may be provided at the front and rear of the rotor core 30, respectively, with the partition wall 35 interposed therebetween.

The plurality of first cooling passage portions 32 located at the front and rear of the rotor core 30, respectively, may be disposed adjacent to the partition wall 35 with the partition wall 35 interposed therebetween. Each of the plurality of cooling passages 31 may extend from an outer end of the rotating shaft accommodating hole 53 to have a long radial length, respectively.

The plurality of first core laminations 49 may be formed by laminating a plurality of core plates and be provided with the plurality of first cooling passage portions 32 radially extending from the rotating shaft 38 accommodating hole 53.

The plurality of first cooling passage portions 32 may be spaced apart from each other in the circumferential direction of the first core laminations 49. A radial inner end of each of the plurality of first cooling passage portions 32 may communicate with the rotating shaft accommodating hole 53, respectively.

A communication hole 54 with a circular shape may be formed through a radial outer end of the first cooling passage portion 32 in the thickness direction. A plurality of communication holes 54 may have a diameter greater than a width of the first cooling passage portion 32.

The plurality of communication holes 54 may prevent stress concentration at an end of the first cooling passage portion 32 having a narrow width and a long length, which is provided at the first core laminations 49.

Each of the plurality of second core laminations 50 may be disposed to be in continuous contact with each of the plurality of first core laminations 49 in the thickness direction. Each of the plurality of second core laminations 50 may be spaced apart from the partition wall 35 with the first core lamination 49 interposed therebetween, respectively.

Each of the plurality of second core laminations 50 may have a longer length than the first core lamination 49.

Each of the plurality of second core laminations 50 may be provided with the plurality of second cooling passage portions 33. A cross section of each of the plurality of second cooling passage portions 33 may be formed in a circular shape having the same size as the communication hole 54. Each of the plurality of second cooling passage portions 33 may penetrate in a lengthwise direction of the second core lamination 50, respectively.

One end of each of the plurality of second cooling passage portions 33 formed at the plurality of second core laminations 50 may communicate with the communication hole 54 of the first cooling passage portion 32, respectively. Another end of each the plurality of second cooling passage portions 33 may extend away from the partition wall 35 in the axial direction, so as to be in contact with the end plate 37.

The plurality of first cooling passage portions 32 and the second cooling passage portions 33 may be located between the virtual center lines 51 adjacent to a circumferential direction of the rotor core 30.

A plurality of rotor injection holes 34 may be provided at the end plate 37 to communicate with the another end of the second cooling passage portion 33. Each of the rotor injection holes 34 may be formed through the end plate 37 in the thickness direction. The plurality of rotor injection holes 34 may be spaced apart from each other in the circumferential direction.

An axial movement prevention protrusion 41 may radially protrude from one end of the rotating shaft 38.

A plurality of bearings 46 may be mounted or coupled to both ends of the rotating shaft 38, respectively, so that the both ends of the rotating shaft 38 may be rotatably supported by the plurality of bearings 46.

The rotating shaft 38 may be provided therein with a hollow portion 39. A cooling fluid supply pipe 42 may be accommodated in the hollow portion 39.

The cooling fluid supply pipe 42 may have a cylindrical shape. A cooling passage portion may be formed in the cooling fluid supply pipe 42 in the lengthwise direction, so that oil flows along the cooling passage portion. Both ends of the cooling fluid supply pipe 42 may be opened.

One end of the cooling fluid supply pipe 42 may be fixed to the housing cover 19. The one end of the cooling fluid supply pipe 42 may be connected to a cooling fluid supply portion (not shown), so that a cooling fluid is introduced into the cooling fluid supply pipe 42.

The cooling fluid supply portion (not shown) may be configured to supply a cooling fluid, for example, oil.

One end of the rotating shaft 38 may be opened, so that the cooling fluid supply pipe 42 is inserted into the rotating shaft 38. A blocking wall 48 may be provided at another end of the rotating shaft 38, so that the another end thereof is blocked by the blocking wall 48.

A plurality of rotating shaft injection holes 40 may be formed through one side of the rotating shaft 38 in a thickness direction. The plurality of rotating shaft injection holes 40 may be spaced apart from one another in a circumferential direction of the rotating shaft 38.

Each of the plurality of rotating shaft injection holes 40 may communicate with an inner end of the plurality of first cooling passage portions 32, respectively, so that oil is introduced into the first cooling passage portion 32 from the rotating shaft 38.

The plurality of rotating shaft injection holes 40 may be spaced apart from each other in a lengthwise direction of the rotating shaft 38. The plurality of rotating shaft injection holes 40 may include a plurality of first rotating shaft injection holes 401 located at the front in the lengthwise direction of the rotating shaft 38, and a plurality of second rotating shaft injection holes 402 located at the rear in the lengthwise direction of the rotating shaft 38.

The plurality of first rotating shaft injection holes 401 and the plurality of second rotating shaft injection holes 402 may be spaced apart from each other by a thickness of the partition wall 35.

To evenly distribute a cooling fluid into the rotor core 30, the plurality of first rotating shaft injection holes 401 and the plurality of second rotating shaft injection holes 402 may have a size different from each other according to a flow rate of cooling fluid distributed to bidirectionally from the central portion of the rotor core 30.

A distance between one end of the rotating shaft 38 and the first rotating shaft injection hole 401 may be greater (or longer) than a distance between another end of the rotating shaft 38 and the second rotating shaft injection hole 402.

A size of the first rotating shaft injection hole 401 may be larger (or greater) than a size of the second rotating shaft injection hole 402.

Another end of the cooling fluid supply pipe 42 may be spaced apart from the blocking wall 48 by a predetermined interval, so that oil introduced from the one end of the cooling fluid supply pipe 42 flows to the another end of the cooling fluid supply pipe 42. Then, the oil may be discharged to an outside from an inside of the cooling fluid supply pipe 42 through a gap between the another end of the cooling fluid supply pipe 42 and the blocking wall 48.

An outer diameter of the cooling fluid supply pipe 42 may be smaller than an inner diameter of the rotating shaft 38, so that a return passage (or flow path) 43 may be provided between the inner circumferential surface of the rotating shaft 38 and the outer circumferential surface of the cooling fluid supply pipe 42.

A guide portion 44 may radially protrude from the outer circumferential surface of the cooling fluid supply pipe 42. The guide portion 44 may be inclined with respect to the outer circumferential surface of the cooling fluid supply pipe 42 in a protruding manner.

The guide portion 44 may act as a resistor with respect to a flow direction of oil flowing along the return passage 43.

The guide portion 44 may be located at a downstream of the rotating shaft injection hole 40 based on a flow direction of oil flowing along the return passage 43, so as to guide oil returned along the return passage 43 to the plurality of rotating shaft injection holes 40.

When taking a look at a movement path of oil, oil may be introduced into the rotating shaft 38 from the cooling fluid supply portion (not shown) along the cooling fluid supply pipe 42. An oil flow direction may be changed 180 degrees, to a direction opposite to an oil inflow direction, at the gap between the another end of the cooling fluid supply pipe 42 and the blocking wall 48 of the rotating shaft 38.

Then, the oil discharged from the another end of the cooling fluid supply pipe 42 may be returned along the return passage 43 provided between the rotating shaft 38 and the cooling fluid supply pipe 42. The oil returned via the guide portion 44 may be guided to the plurality of rotating shaft injection holes 40.

Subsequently, the oil may be radially sprayed through the plurality of rotating shaft injection holes 40 into the first cooling passage portion 32 in the rotor core 30.

Then, the oil may move to the second cooling passage portion 33, which is bent 90 degrees from the first cooling passage portion 32, and then flow to opposite ends of the rotor core 30, respectively.

Subsequently, the oil may be sprayed through the plurality of rotor injection holes 34 of the end plate 37 toward the bearing accommodation portion 21 of the housing cover 19.

A gap may be formed between the guide portion 44 and the rotating shaft 38, so that oil penetrates through the gap therebetween.

A protruding portion 45 may radially protrude from one end of the cooling fluid supply pipe 42.

A gap may be formed between the protruding portion 45 and the rotating shaft 38, so that oil is discharged from the rotating shaft 38 through the gap therebetween.

According to the embodiments disclosed herein, the rotor core 30 may be formed by laminating the partition wall 35, the plurality of first laminations 49, and the plurality of second laminations 50 together. In detail, the plurality of first cooling passage portions 32 extending in the radial direction and the plurality of second cooling passage portions 50 extending in the axial direction may be formed such that a cooling fluid flows in the first core laminations 49 and the second core laminations 50, respectively. Then, the first core laminations 40 and the second core laminations 50 may be divided in opposite directions based on the partition wall 35 provided at the central portion of the rotor core 30 along the lengthwise direction of the rotor core 30 to be laminated.

With this configuration, a flow of cooling fluid is branched from the central portion in the lengthwise direction of the rotor core 30 to opposite directions from each other, so that the flow of cooling fluid may be evenly distributed into the rotor core 30. In addition, problems such as vibration, noise and damage caused by an imbalance in flow rate may be solved. Further, a pressure loss of the cooling passage 31 provided in the rotor core 30 may be minimized.

In addition, the cooling fluid supply pipe 42 may be mounted inside the rotating shaft 38 to be accommodated, and the plurality of cooling passages 31 may be provided in the rotor core 30 to guide a cooling fluid to flow into the rotating shaft 38 and the rotor core 30. By doing so, the rotor 29, that causes high heat generation when the electric motor is driven at a high speed, may be directly cooled down, thereby increasing cooling efficiency. As a result, driving stability and reliability of the electric motor may be enhanced, and driving efficiency of the electric motor itself may be increased.

Further, as the cooling fluid supply pipe 42 in the rotating shaft 38 and the cooling passage 31 in the rotor core 30 are located as close as possible to a cause of high heat generation (permanent magnet), thermal resistance between the cause of heat generation and a cooling fluid may be minimized, thereby increasing or maximizing rate (or speed) at which heat is removed.

In addition, as the cooling fluid supply pipe 42 having a small diameter is mounted in the hollow portion of the rotating shaft 38 to be accommodated, and one end of the cooling fluid supply pipe 42 is fixed to the housing 10, problems of friction and sealing between the cooling fluid supply pipe 42 and the rotating shaft 30 may be obviated.

Furthermore, a cooling fluid flowing along the hollow portion of the rotating shaft 38 may evenly cool the entire rotating shaft 38. As an inner diameter of the hollow portion of the rotating shaft 38 is larger (or greater) than the diameter of the cooling fluid supply pipe 42, an inner surface area in the rotating shaft that comes in contact with a cooling fluid may be increased, thereby enhancing a cooling effect.

In addition, as the bearing cooling passage 22 is provided inside the bearing accommodation portion 21 to cool down the bearing 46, lifespan of the bearing 46 may be extended, thereby increasing lifespan of the electric motor, in overall.

## Claims

1. An electric motor, comprising:
a housing provided therein with an accommodating space;
a stator having a stator core and provided in the accommodating space of the housing;
a rotor having a rotor core and rotatably mounted inside the stator with an air gap therebetween;
a rotating shaft provided therein with a hollow portion and having a plurality of rotating shaft injection holes formed at a central portion thereof, so that a cooling fluid introduced into the hollow portion is sprayed through the plurality of rotating shaft injection holes into the rotor core; and
a plurality of cooling passages provided in the rotor core, and having one side thereof communicating with each of the plurality of rotating shaft injection holes and another side thereof communicating with the accommodating space, so that the cooling fluid is sprayed in different directions toward opposite ends to a central portion of the rotor core.

2. The electric motor of claim 1, wherein the cooling fluid is oil or air.

3. The electric motor of claim 1 or 2, wherein each of the plurality of cooling passages is divided into two sides from the central portion of the rotor core along a lengthwise direction of the rotor core,
wherein each of the plurality of cooling passages divided into the two sides comprises:
a plurality of first cooling passage portions communicating with the plurality of rotating shaft injection holes and extending in a radial direction of the rotor core; and
a plurality of second cooling passage portions having one end thereof communicating with the plurality of first cooling passage portions and another end thereof communicating with the accommodating space, and extending in the lengthwise direction of the rotor core.

4. The electric motor of claim 3, wherein the plurality of first cooling passage portions and the plurality of the second cooling passage portions are spaced apart from each other in a circumferential direction, respectively,
wherein each of the plurality of first cooling passage portions and the plurality of second cooling passage portions have a circular cross section, respectively.

5. The electric motor of claim 3 or 4, wherein the rotor core comprises:
a partition wall dividing the plurality of cooling passages into the two sides from the central portion of the rotor core along the lengthwise direction of the rotor core;
a plurality of first core laminations disposed on both surfaces of the partition wall in the lengthwise direction, and formed by laminating a plurality of core plates, each having the plurality of first cooling passage portions therein; and
a plurality of second core laminations disposed on surfaces of the plurality of first core laminations in the lengthwise direction, the surfaces opposite to the partition wall, and each having the plurality of second cooling passage portions therein.

6. The electric motor of claim 5, wherein each of the plurality of first core laminations further comprises:
a rotating shaft accommodating hole formed through a central portion thereof in the lengthwise direction;
a plurality of magnet accommodating holes spaced apart from one another in an outer circumferential direction of the rotating shaft accommodating hole,
wherein each of the plurality of first cooling passage portions is located between the plurality of magnet accommodating holes and the rotating shaft accommodating holes, respectively, and one side thereof communicates with the rotating shaft accommodating hole and another side thereof extends radially outward from the one side, and
wherein each of the plurality of second cooling passage portions is provided at an end of the another side of the first cooling passage portion in a circular shape, respectively.

7. The electric motor of claim 6, wherein the plurality of magnet accommodating holes extends to be inclined with respect to a virtual center line that passes through a center of the rotating shaft accommodating hole in a radial direction, and accommodates permanent magnets of different polarities alternately arranged in a circumferential direction of the rotor core, and
wherein the plurality of second cooling passage portions is located between a plurality of virtual center lines adjacent to the circumferential direction of the rotor core.

8. The electric motor of any one of claims 1 to 7, wherein the plurality of rotating shaft injection holes is provided at the central portion of the rotating shaft to be spaced apart from one another in an axial direction and in a circumferential direction of the rotating shaft.

9. The electric motor of claim 8, wherein each of the plurality of rotating shaft injection holes is radially formed through the rotating shaft, respectively, so that an inner end thereof communicates with the hollow portion, and an outer end thereof communicates with the cooling passage.

10. The electric motor of claim 8 or 9, wherein the plurality of rotating shaft injection holes disposed apart from one another in the axial direction is different in size depending on a flow of the cooling fluid distributed in opposite directions from the central portion of the rotor core.

11. The electric motor of any one of claims 1 to 10, further comprising:
a cooling fluid supply pipe accommodated in the hollow portion of the rotating shaft, so as to supply the cooling fluid to the hollow portion,
wherein one end of the rotating shaft is opened, and another end of the rotating shaft is provided with a blocking wall that blocks an outflow of cooling fluid.

12. The electric motor of claim 11, wherein a return passage is provided between the rotating shaft and the cooling fluid supply pipe, and
wherein the return passage is designed to return the cooling fluid flowing from one end to another end of the cooling fluid supply pipe to the plurality of rotating shaft injection holes,
wherein the cooling fluid supply pipe further comprises a guide portion protruding adjacent to the plurality of rotating shaft injection holes, and configured to guide a cooling fluid flowing along the return passage to the plurality of rotating shaft injection holes.

13. The electric motor of any one of claims 1 to 12, wherein the rotor further comprises:
an end plate mounted at both ends of the rotor core, respectively; and
a plurality of rotor injection holes communicating with the another side of the cooling passage and provided at the end plate, so that the cooling fluid is sprayed into the accommodating space.

14. The electric motor of any one of claims 1 to 13, further comprising:
an oil flow path having an oil inlet port formed at one side thereof and provided inside an upper portion of the housing;
a plurality of radial oil injection holes communicating with the oil flow path and formed through the upper portion of the housing in a thickness direction, so that oil is sprayed into an inner space of the housing; and
an oil outlet port provided at a lower portion of the housing,
wherein the stator further comprises:
a coil wound around the stator core;
an oil flow groove communicating with the oil flow path and formed on a circumferential surface of the stator core along a circumferential direction; and
a plurality of axial injection holes communicating with the oil flow groove and formed in the stator core along a lengthwise direction, so that oil is sprayed from opposite ends of the stator core to the coil.

15. The electric motor of claim 14, further comprising:
a housing cover coupled to both ends of the housing, respectively;
a cover oil flow path having one end thereof communicating with the oil flow path and provided in the housing cover; and
a bearing cooling passage provided at another end of the cover oil flow path to cool down the bearing.
